(19) Europäisches Patentamt
European Patent Office
Office européen des brevets

(11) EP 2 686 394 B1

# (12) EUROPEAN PATENT SPECIFICATION

(45) Date of publication and mention of the grant of the patent:
**21.11.2018 Bulletin 2018/47**

(21) Application number: **12709456.3**

(22) Date of filing: **05.03.2012**

(51) Int Cl.:
***C09D 183/04*** *(2006.01)* ***C09D 125/04*** *(2006.01)*

(86) International application number:
**PCT/US2012/027668**

(87) International publication number:
**WO 2012/128919 (27.09.2012 Gazette 2012/39)**

(54) **SILICONE RELEASE COATING COMPOSITIONS**

SILIKONBESCHICHTUNGSZUSAMMENSETZUNGEN

COMPOSITIONS DE REVÊTEMENT DE DÉCOLLEMENT À BASE DE SILICONES

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **18.03.2011 US 201161454064 P**

(43) Date of publication of application:
**22.01.2014 Bulletin 2014/04**

(73) Proprietor: **Dow Silicones Corporation**
**Midland, MI 48686-0994 (US)**

(72) Inventors:
- **BRASSEUR, Michael, Joseph**
  **Saginaw, MI 48609 (US)**
- **DELOFFRE, Emmanuelle**
  **B-6280 Gerpinnes (BE)**
- **PAREIN, Christian**
  **B-1331 Rosieres (BE)**

(74) Representative: **Murgitroyd & Company**
**Scotland House**
**165-169 Scotland Street**
**Glasgow G5 8PL (GB)**

(56) References cited:
**JP-A- 5 092 523**
**US-A1- 2009 171 055**
**US-A1- 2010 043 933**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 2 686 394 B1

## Description

### Background of the Invention

This invention relates to novel silicone based release coating compositions and silicone based release coating compositions that contain release modifier compositions, both of which contain branched siloxanes.

Silicone based release coatings are useful in applications where relatively non-adhesive surfaces are required. Single sided liners, for example, backing papers for pressure sensitive adhesive labels, are usually adapted to temporarily retain the labels without affecting the adhesive properties of the labels. Double sided liners for example, interleaving papers for double sided and transfer tapes, are utilized to ensure the protection and desired unwind characteristics of a double sided self-adhesive tape or adhesive film.

Improvements in the performance of release coatings are continuously being sought with respect to, for example, ease of cure, i.e. the decrease in cure times at relatively low temperatures, anchorage of coatings to a substrate and release performance. One factor which particularly necessitates continued development of release coatings is the use of an ever increasing number of substrates, for example, polypropylene, polyethylene and polyester onto which release coating compositions are applied and cured and how to improve anchorage of silicone based release coating compositions to the substrates.

The following documents may provide background useful in understanding the background to the present disclosure:

US 2009/171055 A1 relating to low temperature thermal, solventless silicone release coatings for temperature sensitive films;

US 2010.043933 A1 which discloses a lubricating composition for use as a bladder coating during tire manufacture; and

JP 5 092523 A which relates to a thermally adhesive laminated paper.

### Summary of the Invention

The present invention relates to a silicone release coating composition as defined in claim 1 and a method of preparing a coated substrate as defined in claim 11. The dependent claims relate to embodiments and preferred features.

### Detailed Description of the Invention

(I) The Branched Siloxane

The branched siloxane comprises

(a) at least one Q unit of the formula ($SiO_{4/2}$), and

(b) from 15 to 995 D units of the formula $R^b{}_2SiO_{2/2}$ which units (a) and (b) may be inter-linked in any appropriate combination, and

(c) M units of the formula $R^aR^b{}_2SiO_{1/2}$, wherein each $R^a$ substituent is independently selected from an alkyl group having from 1 to 6 carbon atoms, an alkenyl group having from 1 to 6 carbon atoms or an alkynyl group having from 1 to 6 carbon atoms, at least three $R^a$ substituents in the branched siloxane being alkenyl or alkynyl units, and each $R^b$ substituent is independently selected from an alkyl group having from 1 to 6 carbon atoms, an alkenyl group having 2 to 6 carbon atoms, an aryl group, an alkoxy group, an acrylate group or a methacrylate group;

Alternatively, the branched siloxane contains from 20-500 D units. In another alternative, the branched siloxane contains from 50-350 D units.

Generally at least 50% of $R^a$ substituents are alkenyl groups. Alternatively each $R^a$ substituent is an alkenyl group. Each alkenyl group may be selected from vinyl, allyl, butenyl, pentenyl and hexenyl groups but is preferably selected from a vinyl (vi) and a hexenyl (hex) group.

Alternatively the branched siloxane comprises at least one Q unit bonded to four $(R^b{}_2SiO_{2/2})_n$ chains and for example can have the formula

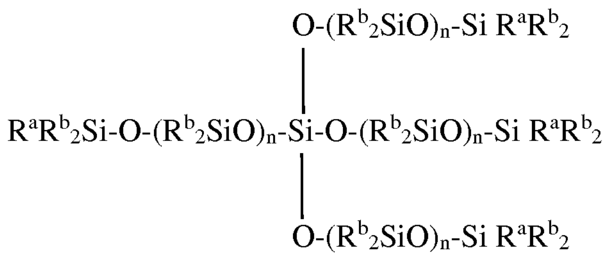

where each n is independently from 1 to 100.

Each $R^b$ substituent is an alkyl group, for example, a methyl, ethyl, propyl, isopropyl, butyl, pentyl or hexyl group. Alternatively the $R^b$ substituent is a methyl or ethyl group. Alternatively the $R^b$ substituent is a methyl group.

Hence, in the case when there is only a single unit of the formula $SiO_{4/2}$ present in the branched siloxane according to the first aspect of the present invention, the branched siloxane may have substantially the following formula wherein each n is independently from 1 to 100 when each $R^a$ substituent is a vinyl group and each $R^b$ group is a methyl group.

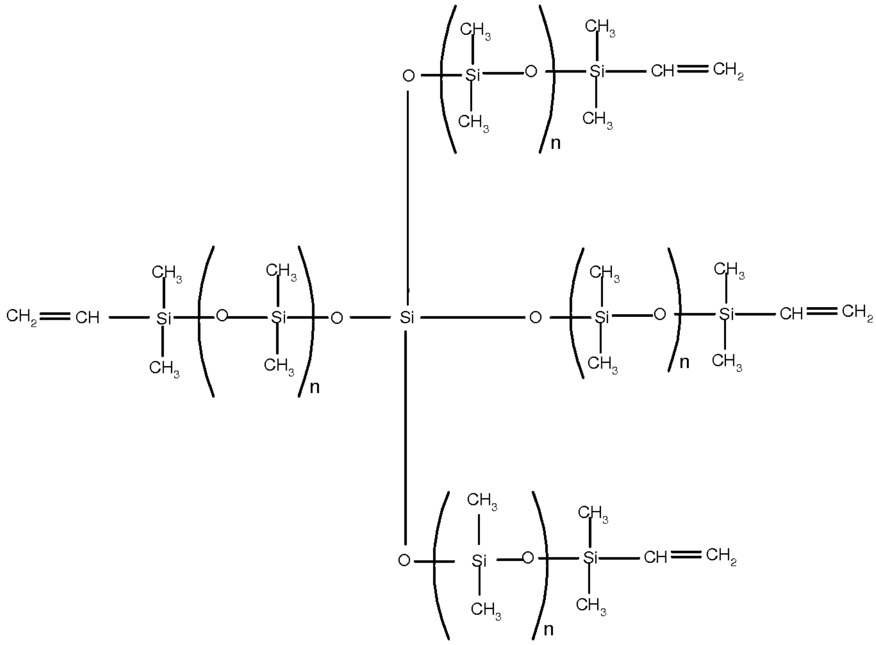

It is to be appreciated that in view of the size of the branched siloxane, it is possible that a very small number of the siloxane units present in the branched siloxane (preferably less than 1% siloxane units) may be units of the formula $R^bSiO_{3/2}$, where $R^b$ as previously defined, may occur.

Henceforth the total number of siloxane units in the branched siloxane will be referred to as the degree of polymerization (DP).

The DP of the branched siloxane may be from 20 to 1000. Alternatively this range is from 20 to 500. In another alternative, the range is from 20 to 400.

A method for the preparation of the branched siloxane comprises the steps of:

(a) mixing a compound having the general formula $(SiO_{4/2})(R^aR^b{}_2SiO_{1/2})_4$ with a cyclic polydiorganosiloxane, and/or a substantially linear hydroxy terminated polydiorganosiloxane, and/or a substantially linear trimethylsiloxy terminated polydiorganosiloxane wherein each $R^a$ substituent is selected from an alkyl group having from 1 to 6 carbon atoms, an alkenyl group having from 1 to 6 carbon atoms or an alkynyl group having from 1 to 6 carbon atoms and each $R^b$ substituent is selected from an alkyl group having from 1 to 6 carbon atoms, an aryl group, an alkoxy group, an acrylate group or a methacrylate group;

(b) causing the mixture to react in the presence of an acid or phosphazene base catalyst at a temperature of up to 180°C; and

(c) neutralizing the reaction mixture.

Generally each cyclic polydiorganosiloxane contains from 3 to 10 $R^b_2SiO_{2/2}$ units although in the alternative, the cyclic polydiorganosiloxanes are polydialkylsiloxane rings consisting of from 3 to 6 repeating $R^b_2SiO_{2/2}$ units in which each $R^b$ substituent is a methyl group.

The type of reaction which takes place is either an acid or a base catalyzed equilibration reaction dependent on the chosen catalyst.

In the case of acid catalyzed equilibration reactions, the acid catalyst used may be any catalyst suitable the catalysis of an acid based equilibration reaction for example trifluoromethane sulfonic acid, acid clays, and supported acid catalyst, for example, amberlyst catalyst. A preferred catalyst is a trifluoromethane sulfonic acid.

In the case of basic catalyzed equilibration preparations the catalyst may be any suitable phosphazene base catalyst, for example phosphazene bases of the following general formulae:

$$((R^1_2N)_3P{=}N\text{-})_k(R^1_2N)_{3-k}P{=}NR^2$$

$$((R^1_2N)_3P{=}N\text{-})_k(R^1_2N)_{3-k}P\text{-}N(H)R^2]^+[A^-]$$

or

$$((R^1_2N)_3P{=}N\text{-})_l(R^1_2N)_{4-l}P]^+[A]^-$$

in which $R^1$, which may be the same or different in each position, is hydrogen or an optionally substituted hydrocarbon group, preferably a $C_1$-$C_4$ alkyl group, or in which two $R^1$ groups bonded to the same N atom may be linked to complete a heterocyclic ring, preferably a 5- or 6-membered ring; $R^2$ is hydrogen or an optionally substituted hydrocarbon group, preferably a $C_1$-$C_{20}$ alkyl group, more preferably a $C_1$-$C_{10}$ alkyl group; *k* is 1, 2 or 3, preferably 2 or 3; *l* is 1, 2, 3 or 4, preferably 2, 3 or 4; and A is an anion, preferably fluoride, hydroxide, silanolate, alkoxide, carbonate or bicarbonate. In an alternative, A is an aminophosphazenium hydroxide. Suitable catalysts and their preparation are described, for example, in EP)-A-1008598.

In the case of the acid catalyzed equilibration reaction the reaction mixture is preferably maintained at a temperature of from 75°C to 120°C, most preferably the reaction mixture is maintained at a temperature of from 80°C to 90°C in the presence of a water cocatalyst. In the case of the base catalyzed equilibration reaction the reaction mixture is preferably maintained at a temperature of from 120°C and 160°C, most preferably the reaction mixture is maintained at a temperature of from 130°C to 150°C.

Any appropriate neutralizing agent may be utilized, the choice clearly being dependent on the acidic or basic nature of the catalyst, examples include the use of silylated phosphate or silylated alkylphosphonates, for example bis(trimethylsilyl)hydrogen phosphate or bis(trimethylsilyl)vinyl phosphonate for base catalyzed equilibrium reactions and calcium carbonate for acid catalyzed equilibration reactions.

The amount of each constituent used is dependent on two factors, the required degree of polymerization of the branched siloxane and the number of alkenyl groups required in the branched siloxane. Generally there is from 1.1 to 22.1% by weight of $(SiO_{4/2})(R^aR^b_2SiO_{1/2})_4$ in the mixture of step (a), alternatively from 2.21 to 11.04% by weight of $(SiO_{4/2})(R^aR^b_2SiO_{1/2})_4$ present and in another alternative from 3.45 to 6.9% by weight. The remainder is made up to 100% by weight with the cyclic polydiorganosiloxane and/or the substantially linear hydroxy terminated polydiorganosiloxane and/or the substantially linear trimethylsiloxy terminated polydiorganosiloxane.

(II) The Organohydrogenpolysiloxane Cross Linking Agent

The organohydrogenpolysiloxane cross linking agent generally contains on average at least three Si-H groups and may have the general formula:

$$R^t_3SiO_{1/2}((CH_3)_2SiO_{2/2})_d(R^t_2SiO_{2/2})_e)SiO_{1/2}R^t_3$$

where each $R^t$ independently is an alkyl group having 1 to 4 carbon atoms or hydrogen, *d* is 0 or an integer, *e* is an integer such that $d + e$ is from 8 to 400, alternatively from 10 to 300, and alternatively from 20 to 250. Alternatively the cross-linking agent may be an MQ resin consisting of units of the general formula $SiO_{4/2}$ and $R^q_3SiO_{1/2}$ wherein at least one $R^q$ substituent is a hydrogen atom and the remainder are alkyl groups.

Generally, the ratio of the total amount of Si-H groups of component (II) to aliphatically unsaturated hydrocarbon groups of Component (I) in the release coating composition is in the range of from 0.9:1 to 3:1, alternatively in the range of from 1.1:1 to 2.8:1, alternatively in the range is from 1.2:1 to 2:5.

(III) The Hydrosilylation Catalyst

Component (III) comprises any catalyst typically employed for hydrosilylation reactions. It is preferred to use

platinum group metal-containing catalysts. By platinum group it is meant ruthenium, rhodium, palladium, osmium, iridium and platinum and complexes thereof. Platinum group metal-containing catalysts useful in preparing the compositions of the present invention are the platinum complexes prepared as described by Willing, U.S. Pat. No. 3,419,593, and Brown et al, U.S. Pat. No. 5,175,325, each of which is hereby incorporated by reference to show such complexes and their preparation. Other examples of useful platinum group metal-containing catalysts can be found in Lee et al., U.S. Pat. No. 3,989,668; Chang et al., U.S. Pat. No. 5,036,117; Ashby, U.S. Pat. No. 3,159,601; Lamoreaux, U.S. Pat. No. 3,220,972; Chalk et al., U.S. Pat. No. 3,296,291; Modic, U.S. Pat. No. 3,516,946; Karstedt, U.S. Pat. No. 3,814,730; and Chandra et al., U.S. Pat. No. 3,928,629 all of which are hereby incorporated by reference to show useful platinum group metal-containing catalysts and methods for their preparation. The platinum-containing catalyst can be platinum metal, platinum metal deposited on a carrier such as silica gel or powdered charcoal, or a compound or complex of a platinum group metal. Preferred platinum-containing catalysts include chloroplatinic acid, either in hexahydrate form or anhydrous form, and or a platinum-containing catalyst which is obtained by a method comprising reacting chloroplatinic acid with an aliphatically unsaturated organosilicon compound such as divinyltetramethyldisiloxane, or alkene-platinum-silyl complexes as described in U.S. Patent 6,605,734 (August 12, 2003), such as $(COD)Pt(SiMeCl_2)_2$, where COD is 1,5-cyclooctadiene and Me is methyl. These alkene-platinum-silyl complexes may be prepared, for example by mixing 0.015 mole $(COD)PtCl_2$ with 0.045 mole COD and 0.0612 moles $HMeSiCl_2$.

The appropriate amount of the catalyst will depend upon the particular catalyst used. The platinum catalyst should be present in an amount sufficient to provide at least 2 parts per million (ppm), alternatively, 4 to 200 ppm of platinum based on total weight percent solids (all non-solvent ingredients) in the composition. In another alternative, the platinum is present in an amount sufficient to provide 4 to 150 weight ppm of platinum on the same basis. The catalyst may be added as a single species or as a mixture of two or more different species.

(IV) The Styrene/Olefin Latex

Styrene/olefin latexes useful in the practice of the present invention include, for example, styrene-butadiene latex, styrene-acrylate latex, styrene-acrylate-acrylonitrile latex, styrene-butadiene-acrylate-acrylonitrile latex, styrene-butadiene-acrylonitrile latex, styrene-maleic anhydride latex, and styrene-acrylate-maleic anhydride latex, as well as carboxylated styrene-butadiene latex, carboxylated styrene-acrylate latex, carboxylated styrene-acrylate-acrylonitrile latex, carboxylated styrene-butadiene-acrylate-acrylonitrile latex, carboxylated styrene-butadiene-acrylonitrile latex, carboxylated styrene-maleic anhydride latex, carboxylated styrene-acrylate-maleic anhydride latex, and mixtures thereof. Alternatively, the styrene/olefin latexes are styrene-butadiene latex, styrene-acrylate latex, styrene-acrylate-acrylonitrile latex, styrene-butadiene-acrylate-acrylonitrile latex, styrene-butadiene-acrylonitrile latex, styrene-maleic anhydride latex, styrene-acrylate-maleic anhydride latex, and mixtures thereof. Alternatively, the styrene/olefin latex is styrene-butadiene latex.

The preparation of the styrene/olefin latex is effected by emulsion polymerization, and the result is therefore an emulsion polymer. The preparation can, however, also be effected by solution polymerization and subsequent dispersing in water to form an emulsion.

In a representative procedure of emulsion polymerization, ionic and/or nonionic emulsifiers and/or protective colloids or stabilizers are used as surface-active compounds. The surface-active substance is usually used in amounts of from 0.1 to 10% by weight, based on the monomers to be polymerized. Water-soluble initiators for the emulsion polymerization are two ammonium and alkali metal salts of peroxodisulfuric acid, e.g. sodium peroxodisulfate hydrogen peroxide or organic peroxides e.g. tert-butyl hydroperoxide. Reduction oxidation (redox) initiator systems are also suitable.

In the representative procedure, the amount of the initiators is in general from 0.1 to 10, alternatively from 0.5 to 5, % by weight, based on the monomers to be polymerized. It is also possible to use a plurality of different initiators in the emulsion polymerization.

In the representative procedure of the polymerization, it is possible to use regulators, for example in amounts of from 0 to 0.8 parts by weight, based on 100 parts by weight of the monomers to be polymerized, by means of which the molar mass is reduced. For example, compounds having a thiol group, such as tert-butyl mercaptan, thioglycolic acid ethyl acrylic ester, mercaptoethynol, mercaptopropyltrimethoxylan or tert-dodecyl mercaptan, are suitable.

In the representative procedure, the emulsion polymerization is effected as a rule at from 30°C to 130°C, alternatively from 50°C to 90°C. The polymerization medium may consist either only of water or of mixtures of water and liquids miscible therewith such as methanol. Typically, however, only water is used. The emulsion polymerization can be carried out both as a batch process and in the form of a feed process, including a step or gradient procedure. However, the feed process in which a part of the polymerization batch is initially taken, heated to the polymerization temperature and partly polymerized and then the remainder of the polymerization batch is fed to the polymerization zone, usually via a plurality of spatially separated feeds, one or more of which contain the monomers or in emulsified form, continuously, stepwise or with superposition of a concentration gradient, while maintaining the polymerization, is preferred.

In the representative procedure, the manner in which the initiator is added to the polymerization vessel in the

course of the free radical aqueous emulsion polymerization is known. It may be either completely initially taken in the polymerization vessel or used continuously or stepwise at the rate of its consumption in the course of the free radical aqueous emulsion polymerization. Specifically, this depends on the chemical nature of the initiator system and on the polymerization temperature. Usually, a part is initially taken and the remainder is fed in at the rate of consumption in the polymerization zone.

For removing the residual monomers in the representative procedure, an initiator is usually also added after the end of the actual emulsion polymerization, i.e. after a conversion of the monomers of at least 95%. The individual components may be added to the reactor in the feed process from above, from the side or from below through the reactor bottom. In the emulsion polymerization, aqueous dispersions of the polymer, as a rule having solids contents of from 15 to 75, preferably from 40 to 75, % by weight, are obtained.

Typically, the styrene/olefin latex (IV) is present in the silicone release coating composition at from 0.5 to 19.5 weight % on a dry basis of all the components, alternatively at from 0.75 to 15, and alternatively at from 1-8.

A styrene/olefin latex (IV) having utility in this invention is Styrofan® DS 3492, an aqueous dispersion of a styrene/olefin latex (IV), specifically a styrene butadiene latex from BASF.

The composition and the method for preparing the composition may additionally comprise one or more inhibitors (V) adapted to prevent the cure of the coating composition from occurring below a predetermined temperature. While an inhibitor is not essential to the functioning of the coating composition itself it is to be understood that in the absence of an inhibitor the catalyst may initiate/catalyze the cure of the silicone based release coating composition at ambient temperature, once the three essential constituents have been mixed together.

Examples of suitable inhibitors (V) include ethylenically or aromatically unsaturated amides, acetylenic compounds, ethylenically unsaturated isocyanates, olefinic siloxanes, unsaturated hydrocarbon diesters, conjugated ene-ynes, hydroperoxides, nitriles and diaziridines, specific examples include methyl butynol, dimethyl hexynol or ethynyl cyclohexanol, trimethyl(3,5-dimethyl-1-hexyn-3-oxy)silane, a maleate for example, Bis(2-methoxy-1-methylethyl)maleate, diallylmaleate, a fumarate e.g. diethylfumarate or a fumarate/alcohol mixture wherein the alcohol is, for example, benzyl alcohol or 1-octanol and ethenyl cyclohexyl-1-ol.

The release coating composition may optionally comprise a dialkyl alkenyl silyl terminated polydiorganosiloxane having a viscosity at 25°C of at least 50 $mm^2/s$ of which a dimethyl vinyl silyl terminated or dimethyl hexenyl silyl terminated polydimethylsiloxane is preferred.

Other optional constituents which may also be added to the release coating compositions of the present invention include, for example, silicone release modifiers, fillers, reactive diluents, adhesion promoters, solvents, fragrances, preservatives and fillers, for example, silica, quartz and chalk.

Useful silicone based release modifiers which may be added to the silicone release coating of the present invention may include a branched siloxane as described above and at least one additional component selected from the following components:

(i) an alkenylated silicone resin
(ii) an alkenylated polydiorganosiloxane, and
(iii) one or more primary alkenes containing from 14 to 30 carbon atoms,
(iv) one or more branched alkenes containing at least 10 carbon atoms, and
(v) a non-alkenylated resin.

The alkenylated silicone resin (i) is most preferably at least one alkenylated MQ resin wherein the M groups have the general formula $R^2{}_3SiO_{1/2}$ and are typically trialkyl siloxy and/or dialkyl alkenyl siloxy groups. The alkenyl group may be selected from the group consisting of cyclohexenyl, vinyl, propenyl, butenyl, pentenyl and hexenyl. Most preferably the alkenyl group is a vinyl or hexenyl group. The alkyl groups may be any suitable alkyl groups, but are most preferably methyl groups. The Q groups are groups of the formula $SiO_{4/2}$ and these M and Q groups may be present in any appropriate ratio.

The alkenylated polydiorganosiloxane, is preferably an alkenyldialkyl silyl terminated polydiorganosiloxane comprising units of the formula $R_2SiO_{2/2}$ wherein each R group is an alkyl group having from 1 to 6 carbon atoms or one R group is an alkyl group as defined and one is an alkenyl group having from 1 to 6 carbon atoms, preferably a vinyl or hexenyl group.

Each primary alkene (iii) may be any primary alkene containing from 10 to 30 carbon atoms such as, for example, tetradecene and octadecene.

Each branched alkene (iv) may be any one or more suitable branched alkenes, for example, one or more branched alkenes of the general formula

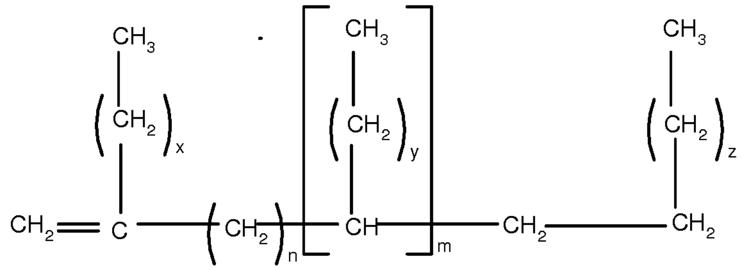

wherein the *n* number of methylene groups and *m* number of branched alkyl groups are randomly distributed in the chain, *n* and *m* are independently 0 or an integer of from 1 to 20, *x, z* and each *y* is independently an integer of from 1 to 12. Preferably the total number of carbon atoms in each alkene is at least 20. It is to be noted that release modifiers containing substantially linear alkenes such as for example component (iii) above tend to cause smoking during the curing process of a coating. It has been found that replacement of component (iii) with a branched alkene as exemplified by component (iv) significantly reduces this problem.

Such a release modifier preferably comprises from 25 to 85% by weight of the branched siloxane, the remainder being made up of one or more of components (i), (ii), (iii) or (iv).

One advantage in using a release modifier in accordance with the present invention is that by replacing at least a proportion of substantially linear alkene with the branched siloxane the smoking effect often seen during the cure process is significantly reduced. It has also been found that when a release modifier is used in a release coating composition, the level of extractables, i.e. the level of uncured siloxane, is maintained at the same level or is even reduced compared to the level of extractables obtained from a release coating composition not containing the release modifier.

While release coating compositions of the present invention may be prepared by merely mixing the branched siloxane (I), the organohydrogenpolysiloxane cross-linking agent (II), the hydrosilylation catalyst (III), and the styrene/olefin latex(IV) together with any optional ingredients, it may be more desirable to prepare a separate package of certain components such as components (I) and (II). Typically, this separate package of components (I) and (II) is an item of commerce and is available from Dow Silicones Corporation, Midland, MI as aqueous emulsions, identified as Syl-Off® EM 7935 and Syl-Off® EM 7990 aqueous emulsion coatings.

The four components can each be aqueous emulsions. In putting together the inventive composition, the four components can be combined in any order, with or without additional water to form a coating bath. If no additional water is added and if it is determined that the viscosity of the bath is higher than 10000 $mm^2/s$, additional water may be added to reduce the viscosity. The contents are stirred for about five minutes to effect dispersion and permitted to equilibrate for about one hour.

The bath containing the release coating composition has a viscosity of not less than 50 $mm^2/s$ and not more than 10000 $mm^2/s$ at 25°C, alternatively, the viscosity is from 50 to 1000 $mm^2/s$ so that the release coating composition is of a suitable viscosity for coating a substrate. If the viscosity is lower than 50$mm^2/s$ problems may occur with the wetting of a substrate surface by the release coating composition. If the viscosity is higher than 10000 $mm^2/s$ then the release coating composition is too viscous for use in the present application.

Optional bath life extenders may be present in an amount sufficient to retard the curing reaction at room temperature. Examples may include compounds which contain one or more primary or secondary alcohol groups, for example, aliphatic and aromatic alcohols with fewer than 10 carbon atoms, such as methanol, ethanol, propanol, phenol and cyclohexanol, carboxylic acids and cyclic ethers.

In another embodiment, the invention is directed to a method of preparing a coated substrate comprising;

(A) applying to at least one surface of the substrate, a silicone release coating composition, comprising;

(I) a branched siloxane comprising

(a) at least one Q unit of the formula ($SiO_{4/2}$), and

(b) from 15 to 995 D units of the formula $R^b{}_2SiO_{2/2}$ which units (a) and (b) may be inter-linked in any appropriate combination, and

(c) M units of the formula $R^aR^b{}_2SiO_{1/2}$, wherein each $R^a$ substituent is independently selected from an alkyl group having from 1 to 6 carbon atoms, an alkenyl group having from 1 to 6 carbon atoms or an alkynyl group having from 1 to 6 carbon atoms, at least three $R^a$ substituents in the branched siloxane being alkenyl or alkynyl units, and each $R^b$ substituent is independently selected from an alkyl group having from 1 to 6 carbon atoms, an alkenyl group having 2 to 6 carbon atoms, an aryl group, an alkoxy group, an acrylate

group or a methacrylate group;

(II) an organohydrogenpolysiloxane cross-linking agent in an amount such that the ratio of the total number of Si-H groups in (II) to aliphatically unsaturated hydrocarbon groups in (I) is from 0.9:1 to 3:1;
(III) a sufficient amount of a hydrosilylation catalyst effective to catalyze the reaction between the branched siloxane and the cross-linking agent; and
(IV) a styrene/olefin latex present in the release coating composition in an amount of from 0.5 to 19.5 weight % on a dry basis of all components; and

(B) curing the silicone release coating composition.

The present release coating composition may be utilized for release purposes on a variety of substrates including paper and films. The substrates may for example be polyethylene, polypropylene, polyester, polystyrene, oriented polypropylene, biaxially oriented polypropylene films, polyethylene coated Kraft paper, or polypropylene coated Kraft paper. An alternative substrate is polyester. An alternative polyester is polyethylene terephthalate.

Any conventional coating technique can be used to apply the release coating composition to the substrate such as brushing, spreading, rolling, wire or knife coating, roll coating, gravure coating, transfer roll coating, air knife or doctor blade coating. The coating can be successfully applied with direct gravure, reverse gravure, single or double Mayer rod, knife-over-roll, and inverted knife techniques. The technique is selected for the substrate to be coated. The coating viscosity is adjusted for the coating technique. The coating solids are adjusted to provide the requisite coating viscosity.

The coat weight of the coating will vary depending upon many factors including the nature of the substrate, for example, its absorbency, porosity, surface roughness, crepe, etc., whether the substrate is a film or paper and whether the paper is impregnated. Generally, the release coating is applied in an amount ranging from about 0.5 to 5 pounds dry weight per 3,000 square feet. Film, foil, and super calendared Kraft paper substrates are typically coated with 35% solids material by direct or reverse gravure techniques to a dry coating weight of 0.5 to 1.5 pounds per 3,000 square feet ream. Coarse paper substrates, such as crepe or flatback, are typically coated with 35 to 45% solids material by any of the aforementioned techniques to a dry coat weight of 2 to 6 pounds per 3,000 sq. ft. ream. While heavier coat weights may be used, this is generally economically undesirable.

Cure time is dependent on several variables, typically on the amount of the organohydrogenpolysiloxane cross-linking agent (II) used, on the thickness of the coating onto the substrate, and on the temperature. When temperature is the variable, a higher temperature results in a faster cure time and a lower temperature results in a slower cure time. The temperature of paper coating machines can be adjusted such that when the paper is coated at a paper temperature as low as 80°C and at a speed on 150m/min, cure occurs at about 30 seconds. When the paper is coated at a paper temperature as high as 220°C and at a speed on 1000m/min, cure occurs at about 1 second.

The following test terms are used in the examples: cure by extractables and anchorage. The test "cure by extractables" provides a quantitative determination of the amount of silicone release coating that is not cured after the curing process (called extractables) and would transfer into a solvent. The degree of cure of a specified silicone release coating applied to a specified substrate is determined quantitatively after preparation under specified and controlled conditions. This is carried out by first determining the coat weight of a standard sized sample of a substrate with a cured coating. The coated sample is then placed in a solution of methyl isobutyl ketone solvent to extract any unreacted siloxane which has not been cross-linked into the coating matrix or adhered to the substrate. After a 20 minute period of time the sample is removed from the solvent, dried at room temperature for five minutes, and reweighed. The percentage extractables indicated in Table 1 are the percentage weight losses after the unreacted silicone had been removed from the coating. The quantity of extractable silicone may be determined by the change in the silicone coat weight on the substrate. The silicone coat weight on the substrate is determined by x-ray fluorescence (XRF) analysis, before and after contact with the methyl isobutyl ketone extraction solvent.

The Anchorage index results measure the anchorage or adhesive strength of a cured silicone coating composition over an extended period of time to a corona treated 50 micron monoaxially oriented polyester terephthalate substrate. For each result in Tables 1 and 2, an identically sized sample of the substrate coated with release coating composition was cut, and the "initial coat weight ($g/m^2$)", i.e. the amount of the release coating composition coated on to the surface of the substrate was determined by x-ray fluorescence.

The aforementioned sample was adhered to a flat plastic disc and fitted in to the base of a 3.2 Kg weight. The sample, with the weight applying downward pressure, is then placed on a felt bed with the release coating composition face of the sample in contact with the felt surface. The weighted sample was subsequently moved along a 30 cm length of the felt bed at a pre-set speed of 3 m/min on two occasions, utilizing different sections of the felt bed on each occasion and the sample coat weight was remeasured and is indicated as "subsequent coat weight ($g/m^2$)."

The results provided in Tables 1 and 2 are determined by way of the following equation

$$\% \text{ Anchorage index } = \frac{Subsequent\ coat\ weight\ g/m^2}{Initial\ coat\ weight\ g/m^2} \text{ X100}$$

The % Anchorage Index is therefore the percentage of the release coating composition remaining on the surface of the substrate and hence 100% Anchorage Index equates to no rub off.

The invention having been generally described above, may be better understood by reference to the examples described below. The following examples represent specific but non-limiting embodiments of the present invention.

Example 1

Added to a vessel were 28.5 parts (40% on a dry basis) Syl-Off® EM 7935 aqueous emulsion coating from Dow Silicones Corporation, Midland, MI that contains component (I) and component (II), present as 30-60 wt% dimethyl cyclics with tetrakis(vinyldimethylsiloxy)silane and 1-5 wt% dimethyl, methylhydrogen siloxane respectively, 1.5 parts (40% on a dry basis) Syl-Off® EM 7975 catalyst aqueous emulsion from Dow Silicones Corporation, Midland, MI that contains component (III), present as 30-60 wt% of a Pt complex dispersed in dimethylvinyl-terminated dimethyl siloxane, and 70 parts water. The contents were stirred for five minutes to effect disperson and then permitted to rest for one hour to establish equilibrium.

Example 2

The procedure and reactants of Example 1 were repeated except that 0.5 parts (50% on a dry basis) Styrofan® DS 3492, an aqueous dispersion of a styrene/olefin latex (IV), specifically a styrene butadiene latex from BASF, was added to give a formulation containing 2% of component (IV) in the formulation, on a dry basis.

Example 3

The procedure and reactants of Example 1 were repeated except that 1 part (50% on a dry basis) Styrofan® DS 3492, was added to give a formulation containing 4% of component (IV) in the formulation, on a dry basis.

Example 4

The procedure and reactants of Example 1 were repeated except that 2 parts (50% on a dry basis) Styrofan® DS 3492, was added to give a formulation containing 8% of component (IV) in the formulation, on a dry basis.

Example 5

The procedure and reactants of Example 1 were repeated except that 5 parts (50% on a dry basis) Styrofan® DS 3492, was added to give a formulation containing 20% of component (IV) in the formulation, on a dry basis.

Example 6

Added to a vessel were 28.5 parts (40% on a dry basis) Syl-Off® EM 7990 aqueous emulsion coating from Dow Silicones Corporation, Midland, MI that contains components (I) and (II), present as 30-60 wt% dimethyl cyclics with tetrakis(vinyldimethylsiloxy)silane and 1-5 wt% dimethyl, methylhydrogen siloxane respectively, 1.5 parts (40% on a dry basis) Syl-Off® EM 7975 catalyst aqueous emulsion from Dow Silicones Corporation, Midland, MI that contains component (III), present as 30-60 wt% of a Pt complex dispersed in dimethylvinyl-terminated dimethyl siloxane, and 70 parts water. The contents were stirred for five minutes to effect disperson and then permitted to rest for one hour to establish equilibrium.

Example 7

The procedure and reactants of Example 6 were repeated except that 0.5 parts (50% on a dry basis) Styrofan® DS 3492, was added to give a formulation containing 2% of component (IV) in the formulation, on a dry basis.

Example 8

The procedure and reactants of Example 6 were repeated except that 1 part (50% on a dry basis) Styrofan®

DS 3492, was added to give a formulation containing 4% of component (IV) in the formulation, on a dry basis.

Example 9

The procedure and reactants of Example 6 were repeated except that 2 parts (50% on a dry basis) Styrofan® DS 3492, was added to give a formulation containing 8% of component (IV) in the formulation, on a dry basis.

The following Table 1 details a comparative study of the release performance of a corona treated oriented polyethylene terephthalate (PET), substrate coated with silicone based release coating compositions of Examples 1-5.

The composition of each Example was applied on to the PET substrate from Mitsubishi using a direct reverse gravure type TR15e coater at room temperature (20°C) and then the resultant coating was cured at 180°C for a period of 7.6 seconds.

Table 1

| Example No. | % of styrene/olefin latex (IV) in the release coating composition on a dry basis of all components | Extractables % | Anchorage Index One day |
|---|---|---|---|
| 1 | 0 | 9.4 | 49 |
| 2 | 2 | 7.8 | 79 |
| 3 | 4 | 8.8 | 74 |
| 4 | 8 | 8.7 | 86 |
| 5 | 20 | 15.0 | 48 |

As observed above, the addition of the styrene/olefin latex as styrene butadiene latex in Examples 2-4 shows an improvement in the anchorage index of the silicone release coating composition to the PET substrate, at one day without adversely affecting the cure.

The following Table 2 details a comparative study of the release performance of a corona treated oriented polyethylene terephthalate (PET), substrate coated with silicone release coating compositions of Examples 6-9.

The composition of each Example was applied on to the PET substrate from Mitsubishi using a direct reverse gravure type TR15e coater at room temperature (20°C) and then the resultant coating was cured at 180°C for a period of 7.6 seconds.

Table 2

| Example No. | % of styrene/olefin latex (IV) in the release coating composition on a dry basis of all components | Extractables % | Anchorage Index at 1 day | Anchorage Index at 3 months | % Decrease in Anchorage Index |
|---|---|---|---|---|---|
| 6 | 0 | 1.5 | 46 | 5 | -89 |
| 7 | 2 | 0.9 | 85 | 21 | -75 |
| 8 | 4 | 0.9 | 86. | 75 | -13 |
| 9 | 8 | 0.8 | 92 | 91 | -1 |

As observed above, the addition of the styrene/olefin latex as styrene butadiene latex in Examples 7-9 shows an improvement in the anchorage index of the silicone release coating composition to the PET substrate, at both one day and at three months without adversely affecting the cure. Further, after 3 months' ageing of the coated film, the % decrease in the anchorage index of Examples 7-9 containing the styrene/olefin latex is not as severe as the % decrease in the anchorage index of the baseline composition Example 6.

While the invention has been explained in relation to its preferred embodiments, it is to be understood that various modifications thereof will become apparent to those skilled in the art upon reading the description. Therefore, it is to be understood that the invention disclosed herein is intended to cover such modifications as fall within the scope of the appended claims.

## Claims

1. A silicone release coating composition, comprising;

(I) a branched siloxane comprising

(a) at least one Q unit of the formula ($SiO_{4/2}$), and
(b) from 15 to 995 D units of the formula $R^b_2SiO_{2/2}$ which units (a) and (b) may be inter-linked in any appropriate combination, and
(c) M units of the formula $R^3R^b_2SiO_{1/2}$, wherein each $R^a$ substituent is independently selected from an alkyl group having from 1 to 6 carbon atoms, an alkenyl group having from 1 to 6 carbon atoms or an alkynyl group having from 1 to 6 carbon atoms, at least three $R^a$ substituents in the branched siloxane being alkenyl or alkynyl units, and each $R^b$ substituent is independently selected from an alkyl group having from 1 to 6 carbon atoms, an alkenyl group having 2 to 6 carbon atoms, an aryl group, an alkoxy group, an acrylate group and a methacrylate group;

(II) an organohydrogenpolysiloxane cross-linking agent in an amount such that the ratio of the total number of Si-H groups in (II) to aliphatically unsaturated hydrocarbon groups in (I) is from 0.9:1 to 3:1 ;
(III) a sufficient amount of a hydrosilylation catalyst effective to catalyze the reaction between the branched siloxane and the cross-linking agent; and
(IV) a styrene/olefin latex present in the release coating composition in an amount of from 0.5 to 19.5 weight % on a dry basis of all components.

2. The release coating composition of claim 1 wherein the styrene/olefin latex (IV) is selected from styrene-butadiene latex, styrene-acrylate latex, styrene-acrylate-acrylonitrile latex, styrene-butadiene-acrylate-acrylonitrile latex, styrene-butadiene-acrylonitrile latex, styrene-maleic anhydride latex, styrene-acrylate-maleic anhydride latex, carboxylated styrene-butadiene latex, carboxylated styrene-acrylate latex, carboxylated styrene-acrylate- acrylonitrile latex, carboxylated styrene-butadiene-acrylate-acrylonitrile latex, carboxylated styrene-butadiene-acrylonitrile latex, carboxylated styrene-maleic anhydride latex, and carboxylated styrene-acrylate-maleic anhydride latex, and mixtures thereof.

3. The release coating composition of claims 1 or 2 wherein the styrene/olefin latex (IV) is selected from styrene-butadiene latex, styrene-acrylate latex, styrene-acrylate-acrylonitrile latex, styrene-butadiene-acrylate-acrylonitrile latex, styrene-butadiene- acrylonitrile latex, styrene-maleic anhydride latex, styrene-acrylate-maleic anhydride latex, and mixtures thereof.

4. The release coating composition according to any one of claims 1-3 wherein the styrene/olefin latex (IV) is styrene-butadiene latex.

5. The release coating composition according to any one of claims 1-4 where the branched siloxane (I) has the general formula

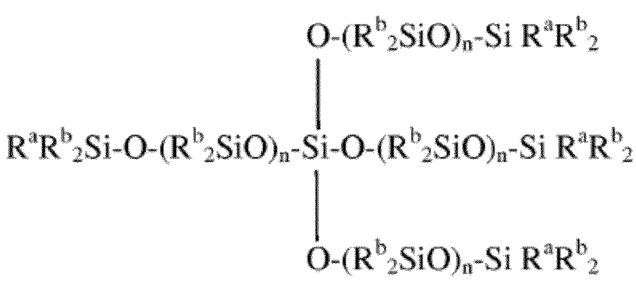

where each n is independently from 1 to 100.

6. The release coating composition of according to any one of claims 1-5 wherein the organohydrogenpolysiloxane cross linking agent (II) contains at least three Si-H groups.

7. The release coating composition of according to any one of claims 1-6 wherein the organohydrogenpolysiloxane

cross linking agent (II) has the general formula:

$$R^t_3SiO_{1/2}((CH_3)_2SiO_{2/2})_d(R^t_2SiO_{2/2})_e)SiO_{1/2}R^t_3$$

where each $R^1$ is an alkyl group having 1 to 4 carbon atoms or hydrogen, d is 0 or an integer, e is an integer such that d + e is from 8 to 100.

**8.** The release coating composition according to any one of claims 1-7 wherein the ratio of the total amount of Si-H groups in (II) to aliphatically unsaturated hydrocarbon groups in (I) is in the range of from 1.1:1 to 2.5:1.

**9.** The release coating composition according to any one of claims 1-8 wherein the hydrosilylation catalyst (III) includes complexes or compounds of group VIII metals.

**10.** The release coating composition of according to any one of claims 1-9 wherein the hydrosilylation catalyst(III) is a group VIII metal comprising platinum, ruthenium, rhodium, palladium, osmium and indium.

**11.** A method of preparing a coated substrate; comprising;

(A) applying to at least one surface of a substrate, a silicone release coating composition of any of claims 1-11 and
(B) curing the silicone release coating composition.

**12.** The method according to claim 11 in which the substrate comprises paper and film.

**13.** The method according to any one of claims 11-13 in which the substrate comprises polyethylene, polypropylene, polyester, polystyrene, oriented polypropylene, biaxially oriented polypropylene, polyethylene coated Kraft paper, or polypropylene coated Kraft paper.

**14.** The method according to any one of claims 11-14 wherein the substrate is a polyester of polyethylene terephthalate.

**Patentansprüche**

**1.** Eine Silikontrennbeschichtungszusammensetzung, die Folgendes beinhaltet:

(I) ein verzweigtes Siloxan, das Folgendes beinhaltet:

(a) mindestens eine Q-Einheit der Formel ($SiO_{4/2}$), und
(b) 15 bis 995 D-Einheiten der Formel $R^b{}_2SiO_{2/2}$, wobei die Einheiten (a) und (b) in einer beliebigen passenden Kombination miteinander verknüpft sein können, und
(c) M-Einheiten der Formel $R^aR^b{}_2SiO_{1/2}$, wobei jeder $R^a$-Substituent unabhängig ausgewählt ist aus einer Alkylgruppe mit 1 bis 6 Kohlenstoffatomen, einer Alkenylgruppe mit 1 bis 6 Kohlenstoffatomen oder einer Alkinylgruppe mit 1 bis 6 Kohlenstoffatomen, wobei mindestens drei $R^a$-Substituenten in dem verzweigten Siloxan Alkenyl- oder Alkinyleinheiten sind, und jeder $R^b$-Substituent unabhängig ausgewählt ist aus einer Alkylgruppe mit 1 bis 6 Kohlenstoffatomen, einer Alkenylgruppe mit 2 bis 6 Kohlenstoffatomen, einer Arylgruppe, einer Alkoxygruppe, einer Acrylatgruppe und einer Methacrylatgruppe;

(II) ein Organowasserstoffpolysiloxan-Vernetzungsmittel in einer solchen Menge, dass das Verhältnis der Gesamtzahl an Si-H-Gruppen in (II) zu aliphatisch ungesättigten Kohlenwasserstoffgruppen in (I) 0,9 : 1 bis 3 : 1 beträgt;
(III) eine ausreichende Menge eines Hydrosilylierungskatalysators, die wirksam ist, um die Reaktion zwischen dem verzweigten Siloxan und dem Vernetzungsmittel zu katalysieren; und
(IV) einen Styrol-/Olefin-Latex, der in der Trennbeschichtungszusammensetzung in einer Menge von 0,5 bis 19,5 Gew.-% auf einer Trockenbasis aller Komponenten vorhanden ist.

**2.** Trennbeschichtungszusammensetzung gemäß Anspruch 1, wobei der Styrol-/Olefin-Latex (IV) ausgewählt ist aus Styrol-Butadien-Latex, Styrol-Acrylat-Latex, Styrol-Acrylat-Acrylnitril-Latex, Styrol-Butadien-Acrylat-Acrylnitril-Latex, Styrol-Butadien-Acrylnitril-Latex, Styrol-Maleinsäureanhydrid-Latex, Styrol-Acrylat-Maleinsäureanhydrid-Latex, carboxyliertem Styrol-Butadien-Latex, carboxyliertem Styrol-Acrylat-Latex, carboxyliertem Styrol-Acrylat-Acrylnitril-Latex, carboxyliertem Styrol-Butadien-Acrylat-Acrylnitril-Latex, carboxyliertem Styrol-Butadien-Acrylnitril-Latex, carboxyliertem Styrol-Maleinsäureanhydrid-Latex und carboxyliertem Styrol-Acrylat-Maleinsäureanhydrid-Latex und Mischungen davon.

**3.** Trennbeschichtungszusammensetzung gemäß Anspruch 1 oder 2, wobei der Styrol-/Olefin-Latex (IV) ausgewählt ist aus Styrol-Butadien-Latex, Styrol-Acrylat-Latex, Styrol-Acrylat-Acrylnitril-Latex, Styrol-Butadien-Acrylat-Acrylnitril-Latex, Styrol-Butadien-Acrylnitril-Latex, Styrol-Maleinsäureanhydrid-Latex, Styrol-Acrylat-Maleinsäureanhydrid-Latex und Mischungen davon.

**4.** Trennbeschichtungszusammensetzung gemäß einem der Ansprüche 1-3, wobei der Styrol-/Olefin-Latex (IV) Styrol-Butadien-Latex ist.

**5.** Trennbeschichtungszusammensetzung gemäß einem der Ansprüche 1-4, wobei das verzweigte Siloxan (I) die folgende Allgemeinformel aufweist:

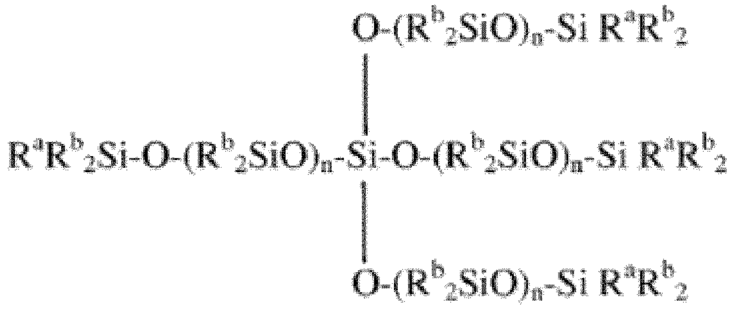

wobei jedes n unabhängig 1 bis 100 ist.

**6.** Trennbeschichtungszusammensetzung gemäß einem der Ansprüche 1-5, wobei das Organowasserstoffpolysiloxan-Vernetzungsmittel (II) mindestens drei Si-H-Gruppen enthält.

**7.** Trennbeschichtungszusammensetzung gemäß einem der Ansprüche 1-6, wobei das Organowasserstoffpolysiloxan-Vernetzungsmittel (II) die folgende Allgemeinformel aufweist:

$$R^t_3SiO_{1/2}((CH_3)_2SiO_{2/2})_d(R^t_2SiO_{2/2})_e)SiO_{1/2}R^t_3$$

wobei jedes $R^1$ eine Alkylgruppe mit 1 bis 4 Kohlenstoffatomen oder Wasserstoff ist, d 0 oder eine ganze Zahl ist, e eine ganze Zahl ist, sodass d + e von 8 bis 100 ist.

**8.** Trennbeschichtungszusammensetzung gemäß einem der Ansprüche 1-7, wobei das Verhältnis der Gesamtmenge von Si-H-Gruppen in (II) zu aliphatisch ungesättigten Kohlenwasserstoffgruppen in (I) im Bereich von 1,1 : 1 zu 2,5 : 1 liegt.

**9.** Trennbeschichtungszusammensetzung gemäß einem der Ansprüche 1-8, wobei der Hydrosilylierungskatalysator (III) Komplexe oder Verbindungen von Metallen der Gruppe VIII umfasst.

**10.** Trennbeschichtungszusammensetzung gemäß einem der Ansprüche 1-9, wobei der Hydrosilylierungskatalysator (III) ein Metall der Gruppe VIII ist, beinhaltend Platin, Ruthenium, Rhodium, Palladium, Osmium und Indium.

**11.** Ein Verfahren zum Bilden eines beschichteten Substrats, das Folgendes beinhaltet:

(A) Anwenden einer Silikontrennbeschichtungszusammensetzung gemäß einem der Ansprüche 1-11 auf mindestens eine Oberfläche eines Substrats und
(B) Härten der Silikontrennbeschichtungszusammensetzung.

**12.** Verfahren gemäß Anspruch 11, wobei das Substrat Papier und Folie beinhaltet.

**13.** Verfahren gemäß einem der Ansprüche 11-13, wobei das Substrat Polyethylen, Polypropylen, Polyester, Polystyrol,

orientiertes Polypropylen, biaxial orientiertes Polypropylen, mit Polyethylen beschichtetes Kraftpapier oder mit Polypropylen beschichtetes Kraftpapier beinhaltet.

**14.** Verfahren gemäß einem der Ansprüche 11-14, wobei das Substrat ein Polyester von Polyethylenterephthalat ist.

## Revendications

**1.** Une composition de revêtement antiadhésif à base de silicone, comprenant :

(I) un siloxane ramifié comprenant

(a) au moins une unité Q de formule ($SiO_{4/2}$), et
(b) de 15 à 995 unités D de formule $R^b{}_2SiO_{2/2}$ dont les unités (a) et (b) peuvent être liées entre elles selon n'importe quelle combinaison appropriée, et
(c) M unités de formule $R^aR^b{}_2SiO_{1/2}$, où chaque substituant $R^a$ est sélectionné indépendamment parmi un groupe alkyle ayant de 1 à 6 atomes de carbone, un groupe alcényle ayant de 1 à 6 atomes de carbone ou un groupe alcynyle ayant de 1 à 6 atomes de carbone, au moins trois substituants $R^a$ dans le siloxane ramifié étant des unités alcényle ou alcynyle, et chaque substituant $R^b$ est sélectionné indépendamment parmi un groupe alkyle ayant de 1 à 6 atomes de carbone, un groupe alcényle ayant 2 à 6 atomes de carbone, un groupe aryle, un groupe alcoxy, un groupe acrylate et un groupe méthacrylate ;

(II) un agent de réticulation organohydrogénopolysiloxane en une quantité telle que le rapport du nombre total des groupes Si-H dans (II) aux groupes hydrocarbonés aliphatiquement insaturés dans (I) va de 0,9/1 à 3/1 ;
(III) une quantité suffisante d'un catalyseur d'hydrosilylation efficace pour catalyser la réaction entre le siloxane ramifié et l'agent de réticulation ; et
(IV) un latex styrène/oléfine présent dans la composition de revêtement antiadhésif en une quantité allant de 0,5 à 19,5 % en poids rapporté à la base sèche de tous les constituants.

**2.** La composition de revêtement antiadhésif de la revendication 1 dans laquelle le latex styrène/oléfine (IV) est sélectionné parmi un latex styrène-butadiène, un latex styrène-acrylate, un latex styrène-acrylate-acrylonitrile, un latex styrène-butadiène-acrylate-acrylonitrile, un latex styrène-butadiène-acrylonitrile, un latex styrène-anhydride maléique, un latex styrène-acrylate-anhydride maléique, un latex styrène-butadiène carboxylé, un latex styrène-acrylate carboxylé, un latex styrène-acrylate-acrylonitrile carboxylé, un latex styrène-butadiène-acrylate-acrylonitrile carboxylé, un latex styrène-butadiène-acrylonitrile carboxylé, un latex styrène-anhydride maléique carboxylé, et un latex styrène-acrylate-anhydride maléique carboxylé, et des mélanges de ceux-ci.

**3.** La composition de revêtement antiadhésif de la revendication 1 ou de la revendication 2 dans laquelle un latex styrène/oléfine (IV) est sélectionné parmi un latex styrène-butadiène, un latex styrène-acrylate, un latex styrène-acrylate-acrylonitrile, un latex styrène-butadiène-acrylate-acrylonitrile, un latex styrène-butadiène-acrylonitrile, un latex styrène-anhydride maléique, un latex styrène-acrylate-anhydride maléique, et des mélanges de ceux-ci.

**4.** La composition de revêtement antiadhésif selon l'une quelconque des revendications 1 à 3 dans laquelle le latex styrène/oléfine (IV) est du latex styrène-butadiène.

**5.** La composition de revêtement antiadhésif selon l'une quelconque des revendications 1 à 4 où le siloxane ramifié (I) a la formule générale

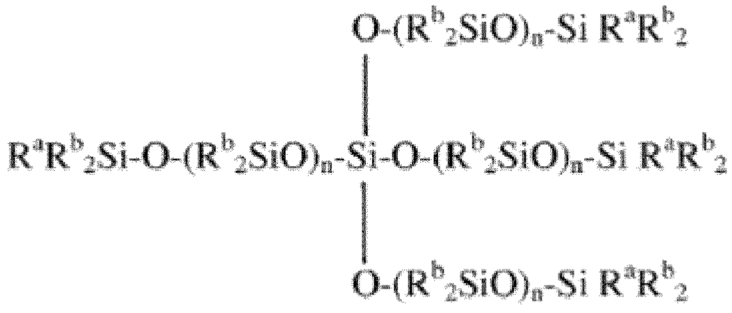

où chaque n va indépendamment de 1 à 100.

**6.** La composition de revêtement antiadhésif selon l'une quelconque des revendications 1 à 5 dans laquelle l'agent de réticulation organohydrogénopolysiloxane (II) contient au moins trois groupes Si-H.

**7.** La composition de revêtement antiadhésif selon l'une quelconque des revendications 1 à 6 dans laquelle l'agent de réticulation organohydrogénopolysiloxane (II) a la formule générale :

$$R^t_3SiO_{1/2}((CH_3)_2SiO_{2/2})_d(R^t_2SiO_{2/2})_e)SiO_{1/2}R^t_3$$

où chaque $R^1$ est un groupe alkyle ayant 1 à 4 atomes de carbone ou un hydrogène, d est 0 ou un nombre entier, e est un nombre entier tel que d + e aille de 8 à 100.

**8.** La composition de revêtement antiadhésif selon l'une quelconque des revendications 1 à 7 dans laquelle le rapport de la quantité totale des groupes Si-H dans (II) aux groupes hydrocarbonés aliphatiquement insaturés dans (I) est compris dans la gamme allant de 1,1/1 à 2,5/1.

**9.** La composition de revêtement antiadhésif selon l'une quelconque des revendications 1 à 8 dans laquelle le catalyseur d'hydrosilylation (III) inclut des complexes ou des composés de métaux du groupe VIII.

**10.** La composition de revêtement antiadhésif selon l'une quelconque des revendications 1 à 9 dans laquelle le catalyseur d'hydrosilylation (III) est un métal du groupe VIII comprenant le platine, le ruthénium, le rhodium, le palladium, l'osmium et l'indium.

**11.** Une méthode de préparation d'un substrat revêtu ; comprenant :

(A) l'application sur au moins une surface d'un substrat d'une composition de revêtement antiadhésif à base de silicone de n'importe lesquelles des revendications 1 à 11 et
(B) la cuisson de la composition de revêtement antiadhésif à base de silicone.

**12.** La méthode selon la revendication 11 dans laquelle le substrat comprend du papier et un film.

**13.** La méthode selon l'une quelconque des revendications 11 à 13 dans laquelle le substrat comprend du polyéthylène, du polypropylène, du polyester, du polystyrène, du polypropylène orienté, du polypropylène orienté biaxialement, du papier Kraft revêtu de polyéthylène, ou du papier Kraft revêtu de polypropylène.

**14.** La méthode selon l'une quelconque des revendications 11 à 14 dans laquelle le substrat est un polyester de polyéthylène téréphtalate.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 2009171055 A1
- US 2010043933 A1
- JP 5092523 A
- EP 1008598 A
- US 3419593 A, Willing
- US 5175325 A, Brown
- US 3989668 A, Lee
- US 5036117 A, Chang
- US 3159601 A, Ashby
- US 3220972 A, Lamoreaux
- US 3296291 A, Chalk
- US 3516946 A, Modic
- US 3814730 A, Karstedt
- US 3928629 A, Chandra
- US 6605734 B